# FASCICULE DE BREVET EUROPEEN

(11) **EP 0 628 670 B1**
(45) Date de publication et mention de la délivrance du brevet: **12.08.1998**
(21) Numéro de dépôt: 94420168.0
(22) Date de dépôt: 13.06.1994
(51) Int. Cl.: E04B 1/94, C04B 41/68, E06B 5/16

(54) **Panneau coupe-feu**
Brandschutzplatte
Fire-proof board

(30) Priorité: 14.06.1993 FR 9307348
(43) Date de publication de la demande: 14.12.1994
(73) Titulaire: PARELEC, F-07400 Meysse (FR)
(72) Inventeur: Gastou, Daniel, F-26200 Montelimar (FR); Risson, Roland, F-26200 Montelimar (FR)
(74) Mandataire: Maureau, Philippe

(56) Documents cités:
- DE-A- 4 107 430
- FR-A- 1 595 415
- FR-A- 2 659 963
- FR-A- 2 682 710
- US-A- 4 402 892

## Description

La présente invention concerne un panneau coupe-feu pour bâtiments.

Un tel panneau, conformément aux définitions courantes et notamment aux normes, doit présenter, d'une part, une résistance à la flamme et à un échauffement de plus de 1000°C et, d'autre part, une étanchéité aux gaz chauds et un pouvoir isolant suffisant pour que la température de sa face non exposée à l'échauffement n'excède pas 140°C. Le panneau est agréé en fonction de la durée pendant laquelle il résiste à l'échauffement en répondant à ces critères.

Il est connu, notamment par le FR-A-1 595 415, de réaliser des panneaux de ce genre comprenant des parois extérieures métalliques et une âme intérieure en matériau isolant, tel que du plâtre, de la laine céramique ou similaire.

Ces panneaux, outre leur difficulté de fabrication et de façonnage, présentent les inconvénients de subir d'importantes déformations lors de leur échauffement et d'avoir une conductivité importante de la chaleur.

De plus, les matériaux employés ont généralement des coefficients de dilatation différents, qui provoquent très souvent au vieillissement une désolidarisation des différentes couches ou un tassement des matériaux très légers utilisés pour conserver au panneau une densité raisonnable, et qui provoquent généralement une perte partielle de la résistance du panneau au feu.

Pour remédier à ces inconvénients, il est connu de réaliser des panneaux composites en matière synthétique, à structure stratifiée. Certains panneaux sont réalisés par moulage, à base de résine phénolique. D'autres sont réalisés au moyen de résine organique armée et de une ou plusieurs âmes stratifiées en particules de bois aggloméré.

Ces panneaux présentent l'inconvénient, d'une manière générale, d'avoir une résistance limitée au feu et à l'échauffement, et de ne pouvoir être, par conséquent, agréés que pour des durées de résistance relativement courtes. Notamment, les panneaux à base de résine phénolique présentent l'inconvénient de dégager du gaz lors de leur combustion, ce dégagement se produisant du côté de la face exposée au feu à l'intérieur des panneaux, en tendant à s'échapper par la tranche de ceux-ci. Lorsque les panneaux sont employés pour la réalisation de battants de portes coupe-feu et que leur tranche est habillée par des profilés à section en U engagés à cheval sur elle, les gaz émis s'accumulent entre la tranche des panneaux et les profilés, avec une augmentation de leur pression qui conduit à leur inflammation au-delà d'un certain seuil d'échauffement.

L'emploi de telles résines exclut par conséquent celui de tels profilés. La tranche des panneaux doit alors être habillée par des couches de résine armée et des inserts de rigidification ou de support des différents organes du battant (paumelles, serrure...) doivent être mis en place sur les panneaux, au moment de leur moulage ou ultérieurement, ce qui complexifie leur fabrication.

On connaît également, notamment par le FR-A-2 659 963, de réaliser un panneau comprenant une couche extérieure en résine minérale armée de fibres de verre, une âme isolante en mousse géopolymère et une ou plusieurs couches métalliques intermédiaires, disposées entre les couches extérieures et l'âme.

Ces panneaux présentent des caractéristiques de résistance au feu améliorées mais ne résolvent pas les problèmes précités.

La présente invention vise à remédier à l'ensemble de ces inconvénients en fournissant un panneau à la fois incombustible, susceptible d'être agréé pour une durée de résistance au feu relativement longue, de l'ordre de 2 heures, constitué de matériau ne produisant pas de dégagement de gaz au cours de l'échauffement, et résistant mécaniquement, notamment à la flexion et à la compression, en étant, en outre, facile à usiner, pour l'aménagement dans sa tranche de moyens d'assemblage à d'autres panneaux identiques ou pour la mise en place facile, après la réalisation des panneaux, d'inserts de rigidification ou de support d'organes accessoires.

En particulier, l'invention vise à fournir un panneau combinant de très bonnes performances mécaniques et de très bonnes performances thermiques tout en conservant une densité allant de 0,8 à 1,2.

Le panneau selon l'invention est du type à structure stratifiée, symétrique par rapport à son plan médian longitudinal, comprenant deux couches de résine minérale thermodurcissable et incombustible, armée de fibres de renfort à hautes résistances thermique et mécanique et une âme incombustible de moindre densité.

Selon l'invention, l'âme est constituée par une charge minérale et par un liant compatible avec la résine, lui permettant d'adhérer directement auxdites couches.

Les couches extérieures constituent une protection pare-flamme permettant de limiter l'échauffement de l'âme. Les fibres de renfort que comprennent ces couches assurent la résistance mécanique des faces extérieures du panneau et préviennent toute fissuration de la résine lors de l'échauffement. L'âme constitue un matériau d'isolation qui limite l'échauffement de la face extérieure du panneau non exposée au feu.

La liaison obtenue entre l'âme et les couches extérieures, notamment par pressage à chaud, est très résistante. En effet, aucun délaminage caractérisé n'est apparu entre les différentes strates lors d'essais d'endurance mécanique d'une porte constituée à partir de ce panneau (à l'issue de 400 000 manoeuvres d'ouverture et de fermeture), lors d'essais de résistance au choc et en flexion (lâché d'une masse de 50 kilogrammes située à une hauteur de 4 mètres sur le centre d'un panneau, de 2,5 mètres x 1 mètre), lors d'essais d'absorption de l'humidité (immersion pendant 65 heures puis séchage à l'air ambiant), et lors d'essais de vieillissement accéléré (chaleur + ultraviolets).

Le panneau ainsi constitué est incombustible, ne se déforme pratiquement pas et ne produit aucun dégagement de gaz lors de son échauffement. Les matériaux employés sont imputrescibles et permettent une utilisation en atmosphère humide, sans risque de délaminage.

Ce panneau peut de plus être réalisé en grande longueur puis coupé aux dimensions désirées, pour la réalisation de cloisons, planchers ou plafonds coupe-feu, ainsi que de battants de portes coupe-feu ou pare-flamme, ou de gaines, chemins de câbles, clapets ou volets coupe-feu ou pare-flamme. Il est également facile à usiner au niveau de sa tranche, pour la réalisation de moyens d'assemblage complémentaires de ceux d'autres panneaux identiques, ou pour la mise en place d'inserts, ou encore pour l'intégration d'oculus coupe-feu ou de parois vitrées.

De préférence, le panneau comprend, entre chaque couche extérieure et l'âme centrale précitée, une plaque en matériau de même nature que celui de l'âme centrale mais de densité de l'ordre du double, cette plaque étant solidarisée à l'âme centrale par une couche intermédiaire de liaison constituée par de la résine armée de fibres de renfort, elles-mêmes de même nature que la résine et que les fibres constituant les couches extérieures.

Ces plaques confèrent au panneau une très bonne résistance au poinçonnement, en protégeant l'âme centrale. Des essais d'impact (masse sphérique de 800 grammes lâchée de 2 mètres de hauteur) ont permis d'observer des déformations très faibles et localisées dans le parement, aisément réparables par une stratification locale. De plus, les couches intermédiaires de liaison procurent au panneau un surcroît de rigidité. Des essais de flexion ont permis de faire apparaître un module d'élasticité égal à environ deux-tiers de celui d'aluminium.

Suivant une forme de réalisation préférée :
- la résine employée est du type inorganique alumino silicate et, de préférence, est celle vendue sous la marque "GEOPOLYMITE GP 140" de la Société GEOPOLYMERE ;
- les fibres de renfort sont constituées par au moins un tissu de fibres de verre ; de préférence, pour l'obtention de couches extérieures d'une épaisseur de l'ordre de 3 millimètres, chaque couche extérieure comprend, de l'intérieur du panneau en direction de l'extérieur, un complexe mat/tissu, de préférence du type connu sous la dénomination "ROVIMAT", de masse surfacique totale de 800 grammes/m2, un mat du type vendu sous la marque "UNIFILO", de masse surfacique de 450 grammes/m2, et un voile de finition ;
- les plaques intermédiaires sont constituées par des charges minérales et des fibres cellulosiques liées par un silicate de calcium, ont une épaisseur de l'ordre de 9 millimètres et une densité de l'ordre de 875 kilogrammes/m3 ; de préférence, on emploie des plaques de matériau connu sous la dénomination "SUPALUX S" de la Société CAPE BOARD ou sous la dénomination "PROMABEST Y" de la Société PROMAT ;
- les couches de liaison entre les plaques intermédiaires et l'âme centrale sont constituées par un mat connu sous la dénomination "UNIFILO", de masse surfacique de 450 grammes/m2, enduit de résine telle que précitée ; et
- l'âme centrale est constituée par des charges minérales et des fibres cellulosiques liées entre elles par un silicate de calcium, d'épaisseur de l'ordre de 30 millimètres et de densité de l'ordre de 470 kilogrammes/m3 ; de préférence, on emploie des plaques de matériau, connu sous la dénomination "SUPALUX V" de la Société CAPE BOARD.

Le panneau ainsi constitué présente d'excellentes caractéristiques coupe-feu. Il est en outre aisément usinable à partir de sa tranche ou de sa face, pour la réalisation de profils complémentaires d'assemblage des panneaux entre eux ou pour la mise en place d'inserts de renforcement ou de support d'organes accessoires, ou pour l'intégration d'oculus ou de parois vitrées, lorque le panneau est employé pour réaliser des battants de portes.

La résine peut être plus ou moins chargée de microsphères de verre ou de céramique, permettant, en fonction des besoins, d'influer sur la densité finale du produit et sur ses propriétés pare-flamme.

De toute façon, l'invention sera bien comprise à l'aide de la description qui suit, en référence au dessin schématique annexé représentant, à titre d'exemple non limitatif, une forme de réalisation préférée du panneau coupe-feu qu'elle concerne.
La figure 1 en est une vue en coupe ; et
la figure 2 est une vue en coupe horizontale d'une porte coupe-feu à deux battants, réalisée à partir de ce panneau.

Les figures représentent un panneau coupe-feu 2, à structure stratifiée et symétrique par rapport à son plan médian longitudinal.

Le panneau 2 comprend, de l'extérieur vers l'intérieur :
- deux couches extérieures 3 de résine minérale thermodurcissable et incombustible, armées de fibres de renfort à hautes résistances thermique et mécanique ; ces couches ont une épaisseur d'environ 3 millimètres ;
- des plaques intermédiaires 4 constituées par des charges minérales et des fibres cellulosiques liées par un silicate de calcium, d'une épaisseur de l'ordre de 9 millimètres et d'une densité de l'ordre de 875 kilogrammes/m3 ;
- des couches de liaison 5 entre les plaques intermédiaires 4 et l'âme centrale 6, constituées par de la résine minérale armée telle que précitée ; ces couches ont une épaisseur de l'ordre de un millimètre ; et
- une âme centrale 6 constituée par des charges minérales et des fibres cellulosiques liées entre elles par un silicate de calcium, d'épaisseur de l'ordre de 30 millimètres et de densité de l'ordre de 470 kilogrammes/m3.

La résine employée est du type inorganique alumino silicate et, de préférence, est celle vendue sous la marque "GEOPOLYMITE GP 140" de la Société GEOPOLYMERE.

Les fibres de renfort des couches extérieures 2 sont constituées par au moins un tissu de fibres de verre ; de préférence, chaque couche 2 comprend, de l'intérieur du panneau en direction de l'extérieur, un complexe mat/tissu, de préférence du type connu sous la dénomination "ROVIMAT", de masse surfacique totale de 800 grammes/m2, un mat du type connu sous la dénomination "UNIFILO", de masse surfacique de 450 grammes/m2, et un voile de finition.

Pour les plaques intermédiaires 4 et l'âme centrale 6, on emploie de préférence, respectivement, des plaques du matériau connu sous la dénomination "SUPALUX S" et "SUPALUX V" de la Société CAPE BOARD ou "PROMABEST Y" de la Société PROMAT.

Les couches de liaison 5 sont constituées, outre la résine précitée, par un mat du type connu sous la dénomination "UNIFILO", de masse surfacique de 450 grammes/m2.

Le panneau 2 selon l'invention est ainsi constitué de résine et de plaques à base minérale.

Les couches extérieures 3 constituent une protection pare-flamme permettant de limiter l'échauffement de l'âme 6. Les fibres de renfort que comprennent ces couches 3 assurent la résistance mécanique de ces couches 3 et préviennent toute fissuration de la résine lors de l'échauffement. L'âme 6 constitue un matériau d'isolation qui limite l'échauffement de la face extérieure du panneau 2 non exposée au feu de manière à ce que celle-ci soit apte à être agréée "M0", c'est-à-dire incombustible, et "F0", c'est-à-dire sans dégagement de gaz, pendant une durée d'au moins une heure et demie.

Ce panneau ne se déforme pas lors de son échauffement, et présente une excellente rigidité grâce à la parfaite adhérence à la résine du matériau constituant les plaques 4 et l'âme 6.

Les plaques intermédiaires 4 confèrent au panneau 2 une très bonne résistance au poinçonnement en protégeant l'âme centrale 6. De plus, les couches intermédiaires de liaison 5 procurent au panneau 2 un surcroît de rigidité.

Ce dernier peut être réalisé en grande longueur puis coupé aux dimensions désirées, pour la réalisation de cloisons, planchers ou plafonds coupe-feu, ainsi que de battants de portes coupe-feu. Il est, en outre, aisément usinable à partir de sa tranche, pour la réalisation de profils complémentaires d'assemblage des panneaux entre eux, tels que décrochements à mi-épaisseur complémentaires, tenons/mortaises, etc....

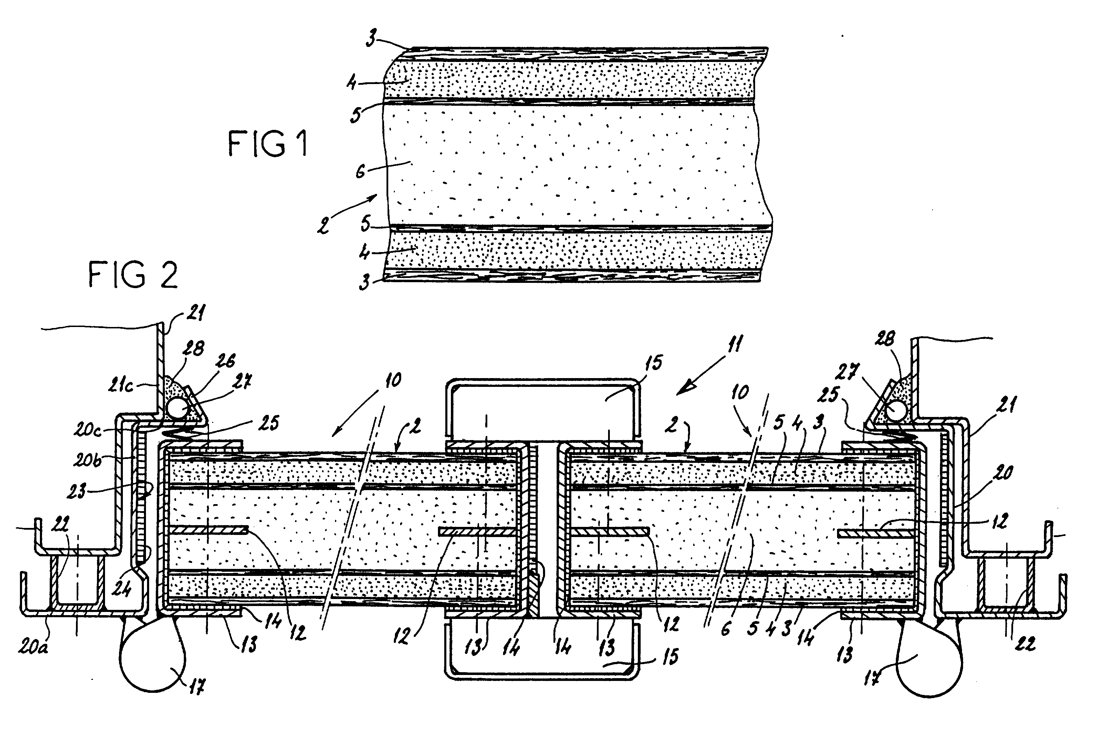

La figure 2 représente une porte coupe-feu réalisée au moyen de panneaux 2.

Chaque battant 10 de la porte 11 est réalisé au moyen d'un panneau 2, coupé aux dimensions adéquates, dans la périphérique duquel ont été usinées des rainures d'insertion de renforts métalliques 12 et sur la tranche desquelles sont engagés des profilés 13 à section en forme de U, avec interposition d'un papier céramique 14, d'épaisseur de deux millimètres.

Les profilés 13 sont boulonnés au panneau 2, les boulons, figurés en traits interrompus, traversant les renforts 12. Les profilés 13 engagés sur les bords libres verticaux du ou des battants 10 reçoivent par boulonnage des butées de fin de course de pivotement 15, tandis que les profilés 13 engagés sur les bords des panneaux 2 qui sont situés en regard de l'huisserie 20 de la porte 11 comportent les gonds 17, rapportés sur eux par soudage.

L'huisserie 20 de la porte 11 est rapportée sur le chambranle 21 préexistant par boulonnage. Chacun de ses montants présente, ainsi que cela est représenté à la figure 2, une paroi frontale 20a, une paroi latérale 20b et une paroi postérieure 20c, chacune sensiblement perpendiculaire par rapport à l'autre. La paroi antérieure 20a reçoit les gonds 17 sur sa face frontale tandis que sa face postérieure comporte un profilé en U 22, jouant le rôle d'entretoise, qui est dimensionné de manière à venir en appui contre la paroi frontale du chambranle 21 lorsque la paroi postérieure 20c de l'huisserie 20 vient en appui contre la paroi 21c du chambranle 21 délimitant le fond de la feuillure que celui-ci comprend.

La paroi latérale 20b présente un décrochement 23 délimitant, avec la paroi postérieure 20c, un évidement recevant un joint intumescent 24.

La paroi postérieure 20c comporte un joint d'isolation 25 et délimite, avec une aile 26 qui la prolonge, une rainure dans laquelle est placé un joint 27 en fibres céramique noyé dans du mastic 28.

Grâce à la facilité de découpe des panneaux 2 à la longueur désirée, à la facilité d'usinage de ceux-ci et à l'absence de dégazage de leur matériau constitutif lors de leur échauffement, la porte 11 peut être réalisée simplement et rapidement par mise en place des renforts 12 et habillage de la tranche des panneaux 2 au moyen des profilés 13, ces derniers comprenant les butées 15 et les gonds 17 rapportés sur eux.

L'huisserie 20, de par sa forme, peut facilement être adaptée au chambranle 21 existant, et procure une protection anti-feu parfaite.

## Revendications

1. Panneau coupe-feu (2), du type à structure stratifiée symétrique par rapport à son plan médian longitudinal, comprenant deux couches extérieures de résine minérale thermodurcissable et incombustible, armée de fibres de renfort à hautes résistances thermique et mécanique et une âme centrale (6) incombustible de moindre densité, caractérisé en ce que l'âme (6) est constituée par une charge minérale et par un liant compatible avec la résine, lui permettant d'adhérer directement auxdites couches (3,5).

2. Panneau selon la revendication 1, caractérisé en ce qu'il comprend, entre chaque couche extérieure (3) et l'âme centrale (6), une plaque (4) en matériau de même nature que celui de l'âme centrale (6) mais de densité de l'ordre du double, cette plaque (4) étant solidarisée à l'âme centrale (6) par une couche intermédiaire de liaison constituée par de la résine armée de fibres de renfort, elles-mêmes de même nature que la résine et que les fibres constituant les couches extérieures (3).

3. Panneau selon la revendication 1, caractérisé en ce que :
- la résine employée est du type inorganique alumino silicate ;
- les fibres de renfort sont constituées par au moins un tissu de fibres de verre ; et
- l'âme centrale (6) est constituée par des charges minérales et des fibres cellulosiques liées entre elles par un silicate de calcium.

4. Panneau selon la revendication 2 ou la revendication 3, caractérisé en ce que les plaques intermédiaires (4) sont constituées par des charges minérales et des fibres cellulosiques liées par un silicate de calcium.

5. Panneau selon l'une des revendications 1 à 4, caractérisé en ce que la résine employée est celle vendue sous la marque "GEOPOLYMITE GP 140" de la Société GEOPOLYMERE.

6. Panneau selon l'une des revendications 1 à 5, caractérisé en ce que l'âme centrale (6) et les plaques intermédiaires (5) sont constituées par des plaques de matériau connu, respectivement, sous la dénomination "SUPALUX V" et "SUPALUX S" de la Société CAPE BOARD, ou sous la dénomination "PROMABEST Y" de la Société PROMAT.

7. Panneau selon l'une des revendications 1 à 6, caractérisé en ce que les couches extérieures (3) ont une épaisseur de l'ordre de 3 millimètres, en ce que l'âme centrale (6) a une épaisseur de l'ordre de 30 millimètres et une densité de l'ordre de 470 kilogrammes/m3, en ce que les plaques intermédiaires (4) ont une épaisseur de l'ordre de 9 millimètres et une densité de l'ordre de 875 kilogrammes/m3 et en ce que les couches de liaison (5) entre les plaques intermédiaires (4) et l'âme centrale (6) ont une épaisseur de l'ordre de un millimètre.

8. Panneau selon l'une des revendications 1 à 7, caractérisé en ce qu'il constitue le ou les battants d'une porte coupe-feu et en ce qu'il reçoit, sur ces tranches, des profilés (13) à section transversale en forme de U.

## Patentansprüche

1. Brandschutzplatte (2), die einen symmetrischen Schichtaufbau bezüglich ihrer Mittelebene in Längsrichtung hat, mit zwei wärmeaushärtbaren und nichtbrennbaren äußeren Mineralharz-Schichten sowie mit Verstärkungsfasern hoher thermischer und mechanischer Widerstandskraft und einem nichtbrennbaren mittigen Kern (6) geringerer Dichte, dadurch gekennzeichnet, daß der Kern (6) aus einer Mineral-Ladung und aus einem mit dem Harz kompatiblen Bindemittel besteht, wodurch es dem Kern ermöglicht wird, unmittelbar an den Schichten (3, 5) zu haften.

2. Platte nach Anspruch 1, dadurch gekennzeichnet, daß sie zwischen jeder äußeren Schicht (3) und dem mittigen Kern (6) eine Platte (4) aus Material gleicher Beschaffenheit wie das des mittigen Kerns (6), jedoch mit etwa doppelter Dichte, aufweist, wobei die Platte (4) mit dem mittigen Kern (6) über eine Zwischen-Verbindungsschicht verbunden ist, die aus Harz besteht, das mit Verstärkungsfasern bestückt ist, die wiederum die gleiche Beschaffenheit wie das Harz und wie die die äußeren Schichten bildenden Fasern (3) haben.

3. Platte nach Anspruch 1, dadurch gekennzeichnet, daß:
- das verwendete Harz ein anorganisches Aluminosilikat ist;
- die Verstärkungsfasern aus mindestens einem Glasfaserge webe bestehen; und
- der mittige Kern (6) aus Mineral-Ladungen und Zellulose-Fasern besteht, die mittels eines Kalziumsilikats miteinander verbunden sind.

4. Platte nach Anspruch 2 oder 3, dadurch gekennzeichnet, daß die Zwischenplatten (4) aus Mineral-Ladungen und Zellulose-Fasern bestehen, die mittels eines Kalziumsilikats verbunden sind.

5. Platte nach einem der Ansprüche 1 bis 4, dadurch gekennzeichnet, daß das verwendete Harz das unter dem Namen "GEOPOLYMITE GP 140" von der Gesellschaft GEOPOLYMERE verkaufte ist.

6. Platte nach einem der Ansprüche 1 bis 5, dadurch gekennzeichnet, daß der mittige Kern (6) und die Zwischenplatten (5) jeweils aus Platten eines unter der Bezeichnung "SUPALUX V" und "SUPALUX S" bekannten Materials von der Gesellschaft CAPE BOARD oder unter der Bezeichnung "PROMABEST Y" der Gesellschaft PROMAT bestehen.

7. Platte nach einem der Ansprüche 1 bis 6, dadurch gekennzeichnet, daß die äußeren Schichten (3) eine Dicke von etwa 3 mm haben, daß der mittige Kern (6) eine Dicke von etwa 30 mm und eine Dichte von etwa 470 kg/m³ hat, daß die Zwischenplatten (4) eine Dicke von etwa 9 mm und eine Dichte von etwa 875 kg/m³ haben und daß die Verbindungsschichten (5) zwischen den Zwischenplatten (4) und dem mittigen Kern (6) eine Dicke von etwa 1 mm haben.

8. Platte nach einem der Ansprüche 1 bis 7, dadurch gekennzeichnet, daß sie den oder die Flügel einer Brandschutztür bildet und daß sie auf ihren Schnittflächen Profile (13) mit U-förmigem Querschnitt aufnimmt.

## Claims

1. A fireproof board (2), of the type having a laminated structure symmetrical with respect to its longitudinal median plane, comprising two outer layers of thermosetting, incombustible mineral resin reinforced with reinforcing fibres exhibiting high thermal resistance and mechanical strength and an incombustible central core (6) of lower density, characterised in that the core (6) consists of a mineral filler and a binder compatible with the resin, enabling it to adhere directly to said layers (3, 5).

2. A board according to claim 1, characterised in that it comprises, between each outer layer (3) and the central core (6), a sheet (4) of a material of the same type as that of the central core (6) but of the order of twice the density, this sheet (4) being firmly connected with the central core (6) by an intermediate bonding layer consisting of resin reinforced with reinforcing fibres, themselves of the same type as the resin and fibres constituting the outer layers (3).

3. A board according to claim 1, characterised in that :
- the resin used is of the inorganic alumino-silicate type;
- the reinforcing fibres consist of at least one glass fibre fabric; and
- the central core (6) consists of mineral fillers and cellulose fibres bonded together by a calcium silicate.

4. A board according to claim 2 or claim 3, characterised in that the intermediate sheets (4) consist of mineral fillers and cellulose fibres bonded by a calcium silicate.

5. A board according to any one of claims 1 to 4, characterised in that the resin used is that sold by GEOPOLYMERE under the brand name "GEOPOLYMITE GP 140".

6. A board according to any one of claims 1 to 5, characterised in that the central core (6) and the intermediate sheets (5) consist of sheets of materials known respectively by the names "SUPALUX V" and SUPALUX S" and made by CAPE BOARD or by the name "PROMABEST Y" and made by PROMAT.

7. A board according to any one of claims 1 to 6, characterised in that the outer layers (3) are of the order of 3 millimetres thick, in that the central core (6) is of the order of 30 millimetres thick and exhibits a density of the order of 470 kilograms/m3, in that the intermediate sheets (4) are of the order of 9 millimetres thick and exhibit a density of the order of 875 kilograms/m3 and in that the bonding layers (5) between the intermediate sheets (4) and the central core (6) are of the order of one millimetre thick.

8. A board according to any one of claims 1 to 7, characterised in that it forms the leaf or leaves of a fireproof door and in that it accommodates at these edges profiles (13) of U-shaped cross section.
